**Europäisches Patentamt**

**European Patent Office**

**Office européen des brevets**

(19)

(11) Veröffentlichungsnummer : **0 320 434 B1**

(12)

# EUROPÄISCHE PATENTSCHRIFT

(45) Veröffentlichungstag der Patentschrift :
**06.05.92 Patentblatt 92/19**

(51) Int. Cl.$^5$ : **H01B 13/00, B29C 53/12**

(21) Anmeldenummer : **88730270.1**

(22) Anmeldetag : **05.12.88**

(54) **Vorrichtung und Verfahren zum automatischen Fertigen von Wendelschnüren.**

(30) Priorität : **09.12.87 DE 3742148**

(43) Veröffentlichungstag der Anmeldung :
**14.06.89 Patentblatt 89/24**

(45) Bekanntmachung des Hinweises auf die
Patenterteilung :
**06.05.92 Patentblatt 92/19**

(84) Benannte Vertragsstaaten :
**AT BE CH DE FR GB GR IT LI NL**

(56) Entgegenhaltungen :
**DE-A- 2 525 915**
**GB-A- 2 026 756**

(73) Patentinhaber : **SIEMENS
AKTIENGESELLSCHAFT
Wittelsbacherplatz 2
W-8000 München 2 (DE)**

(72) Erfinder : **Unterberger, Siegfried
Am Olberg 23
W-8630 Coburg (DE)**
Erfinder : **Wünsch, Günter
Bergstrae 13
W-8632 Neustadt (DE)**

**Beschreibung**

Die Erfindung bezieht sich auf eine Vorrichtung zum automatischen Fertigen einer gewendelten, in Längsrichtung federnden elektrischen und/oder optischen Leitung durch Aufwickeln einer glatten Leitung auf einen Träger und anschließendes Tempern, Vulkanisieren oder Vernetzen des Leitungsmantels, bei der mehrere stabförmige Träger in einem drehbaren Karussell so befestigt sind, daß jeder Träger an mindestens einem seiner beiden Enden um seine Längsachse drehbar gelagert ist und daß alle Träger durch schrittweises Drehen des Karussells durch verschiedene Fertigungsstationen geführt werden können, die um das Karussell herum angeordnet sind.

Überall dort, wo flexible und in der Länge dehnbare elektrische und/oder optische Leitungen benötigt werden, können Wendelschnüre zum Einsatz kommen, so z. B. bei der Verbindung eines Telefonhörers mit dem Telefonapparat.

Ein Verfahren, um solche Wendelschnüre herzustellen, indem eine Leitung wendelförmig auf einen Träger gewickelt, in diesem Zustand erwärmt, danach abgekühlt und schließlich abgewickelt wird, ist in der DE-AS 16 40 772 beschrieben. Bei diesem Verfahren wird die Leitung kontinuierlich auf einen endlosen strangförmigen Träger aufgewickelt und mit diesem Träger durch verschiedene Behandlungszonen geführt. Nachdem der vorher glatten Leitung die wendelförmige Struktur durch Vulkanisieren oder Vernetzen eingeprägt ist, wird die Wendelschnur vom Träger abgewickelt und auf passende Längen zugeschnitten.

In der britischen Patentanmeldung GB-A-20 26 756 wird eine Vorrichtung zum automatischen Fertigen von Wendelschnüren beschrieben, bei der jeweils ein Stück einer gestreckten Leitung auf einen stabförmigen Träger gewickelt wird, wobei mehrere der Träger in einem drehbaren Karussell so befestigt sind, daß jeder der Träger um seine Längsachse drehbar gelagert ist und daß alle Träger durch schrittweises Drehen des Karussells durch verschiedene Fertigungsstationen geführt werden können, die um das Karussell herum angeordnet sind. Um die für den Fertigungsprozeß notwendige Temperatur der Wendelschnüre zu erreichen, wird vorgeschlagen, die gestreckte Leitung direkt nach dem Extrusionsprozeß auf die Träger aufzuwickeln.

Die Nachteile der genannten Verfahren bestehen u. a. darin, daß das Aufwickeln und das Abwickeln der Leitung auf den bzw. von dem Träger aufwendiger Vorrichtungen bedarf bzw. daß es sehr aufwendig ist, die für die Fertigung notwendigen hohen Temperaturen in der aufgewickelten Leitung zu erreichen.

Die Aufgabe der Erfindung besteht darin, eine Vorrichtung und ein Verfahren zu schaffen, die die Nachteile der obengenannten Verfahren vermeiden und es ermöglichen, Wendelschnüre rationeller zu fertigen.

Die Aufgabe wird erfindungsgemäß dadurch gelöst, daß mindestens eine Fertigungsstation, die jeder Träger mit der auf ihn aufgewickelten Leitung im Zuge der Drehung des Karussells durchläuft, als Hochfrequenzheizung (HF-Heizung) ausgeführt ist.

Durch die Anwendung einer HF-Heizung kann die Zeit, die für das Tempern, Vulkanisieren oder Vernetzen benötigt wird, gegenüber dem Fall der Verwendung einer konventionellen Erwärmung durch Strahlung oder Wärmeleitung wesentlich verkürzt werden. Außerdem wird die Heizleistung nach Maßgabe der räumlichen Verteilung des HF-Feldes innerhalb des Leitungsmantels selbst als dielektrische Verlustleistung frei, so daß je nach Wahl der Elektrodengeometrie eine relativ gleichmäßige Temperaturverteilung im Leitungsmantel während der Erwärmung erreicht werden kann.

Weiterhin ist es wegen der Diskontinuität der Fertigung unproblematisch, den Fertigungsprozeß im Störungsfall vorübergehend zu unterbrechen. Eine HF-Heizung spricht im Gegensatz zu einer herkömmlichen Heizung sehr schnell auf eine Steuerung an.

Dadurch, daß die Leitungsstücke schon vor der Verarbeitung zu einer Wendelschnur, und nicht nachher auf eine passende Länge zugeschnitten werden, kann die Leitung leicht im glatten Zustand der Schneidevorrichtung zugeführt werden und der vorgenommene Schnitt steht senkrecht auf der Längsrichtung der glatten Leitung. Das vereinfacht eine Konfektionierung der Wendelschnur nach dem Fertigungsprozeß.

Eine besondere Ausgestaltung der Erfindung sieht vor, daß jeder Träger als Rohr oder Rohrsystem ausgeführt und mindestens an einem seiner beiden Enden in einer kühl- und heizmitteldichten Drehdurchführung gelagert ist.

Durch diese Ausgestaltung der Erfindung ist es möglich, das Aufheizen der Wendelschnur durch eine äußere Heizung zum Zwecke des Temperns, Vulkanisierens oder Vernetzens durch eine Aufheizung des Trägers mittels eines ihn durchströmenden Heizmittels zu beschleunigen. Auch der auf das Tempern, Vulkanisieren oder Vernetzen folgende Abkühlungsprozeß kann durch Einleiten eines Kühlmittels in den rohrförmig ausgebildeten Träger beschleunigt werden. Die Ausgestaltung der Erfindung kann vorteilhafterweise auch so aussehen, daß jeder Träger aus einem Heizwiderstand besteht oder mindestens einen Heizwiderstand enthält. Dadurch kann jeder Träger sehr schnell und je nach dem Material, aus dem er besteht, auf sehr hohe Temperaturen gebracht werden.

Die Anordnung der Elektroden für die Erzeugung des Hochfrequenzfeldes wird vorteilhafterweise so

2

gewählt, daß die eine Elektrode der HF-Heizung durch den Träger der aufgewikkelten Leitung gebildet ist, während die andere Elektrode aus zwei halben Hohlzylindern besteht, die, zu einem Hohlzylinder zusammengesetzt, den Träger mit der aufgewickelten Leitung einschließen.

Durch diese axialsymmetrische Elektrodenanordnung wird beim Betrieb der Hochfrequenzheizung eine rundum gleichmäßige Erwärmung des Leitungsmantels erreicht. Die Aufteilung der äußeren Elektrode in zwei halbe Hohlzylinder ermöglicht einen schnellen und problemlosen Aufbau der Elektrodenanordnung durch einfaches Zusammenschieben der beiden halben Hohlzylinder, und zwar in der Form, daß sie den Träger mit der Wendel in dem gebildeten Hohlzylinder einschließen. Es braucht nur einer der beiden halben Hohlzylinder elektrisch mit dem Hochfrequenzsender in Verbindung zu stehen, da der andere durch das Zusammenschieben mit dem ersten elektrisch mit diesem verbunden wird.

Die Erfindung läßt sich vorteilhafterweise so ausführen, daß mindestens einer der beiden halben Hohlzylinder an mindestens einem seiner Enden eine Nut aufweist.

Die beiden halben Hohlzylinder werden so zusammengefügt, daß der entstehende Hohlzylinder an mindestens einem seiner Enden eine Nut aufweist, durch die ein Ende des zu erwärmenden Leitungsstücks während des Heizvorgangs aus dem Hohlzylinder herausgeführt ist. Die Endstücke der Leitung, die sich während des Heizvorgangs außerhalb der Heizzone befinden, haben nach dem Fertigungsprozeß keine gewendelte Form, sondern stehen als glatte Endstücke der Leitung zur Konfektionierung zur Verfügung.

Die Erfindung kann vorteilhaft auch so gestaltet sein, daß die eine Elektrode der HF-Heizung durch den Träger der Wendel gebildet ist, während die andere Elektrode aus mehr als zwei Teilen besteht, die sich zu einem Hohlzylinder zusammenfügen lassen, der den Träger mit der aufgewickelten Leitung umschließt, wobei mindestens eines der Teile an mindestens einem seiner Enden eine Nut aufweist. Dies ermöglicht ein problemloses Auseinanderziehen der einzelnen Teile zum Einbringen des Trägers mit der aufgewickelten Leitung in den Hohlzylinder. Durch die Nut kann ein Ende der Leitung aus dem Hohlzylinder herausgeführt werden, so daß es nach der Wärmebehandlung als glattes Leitungsendstück zur Verfügung steht.

Ein Verfahren, das sich der beschriebenen Vorrichtung bedient, sieht vor, daß die automatisch abgelängte und in einer Fertigungsstation auf einen Träger aufgewickelte Leitung durch schrittweises Drehen des Karussells durch verschiedene Fertigungsstationen geführt und in einer Fertigungsstation automatisch von dem Träger wieder abgewickelt wird.

Durch die Automatisierung des Ablängens, Auf- und Abwickelns und des Transportes der aufgewickelten Leitung in einem Karussell kann die Fertigung der Wendelschnüre von der glatten Leitung bis zum Endprodukt automatisch erfolgen. Die Fertigungsgeschwindigkeit hängt nur vom Maschinentakt ab.

Das Verfahren zur Fertigung der Wendelschnüre kann vorteilhaft so gestaltet sein, daß in der Fertigungsstation, die als Hochfrequenzheizung ausgeführt ist, die aufgewickelte Leitung durch Betreiben der HF-Heizung zum Zwecke des Temperns, Vulkanisierens oder Vernetzens vorübergehend erwärmt wird. Durch die Verwendung einer HF-Heizung zur Erwärmung des Leitungsmantels werden in Verbindung mit der beschriebenen Fertigungsanlage sehr kurze Taktzeiten für die Fertigung ermöglicht. Außerdem kann die Heizleistung problemlos gesteuert werden.

Eine weitere vorteilhafte Ausgestaltung des Verfahrens sieht vor, daß die Erwärmung des Leitungsmantels mit Hilfe der Hochfrequenzheizung durch eine Beheizung des Trägers unterstützt wird.

Auf diese Weise werden die Teile des Leitungsmantels, von denen durch die Seele der Leitung das Hochfrequenzfeld abgeschirmt ist, durch den Träger zusätzlich beheizt. Dadurch kann der Aufheizvorgang der Wendelschnur weiter beschleunigt werden, und die räumliche Temperaturverteilung innerhalb des Leitungsmantels kann gleichmäßiger gestaltet werden.

Es erweist sich als vorteilhaft, daß die Beheizung des Trägers mit Hilfe eines ihn durchströmenden Heizmittels geschieht. Es wird dadurch eine gleichmäßige und genügend schnelle Erwärmung des Trägers erreicht.

Weiterhin erweist es sich als Vorteil, daß die auf die Erwärmung der aufgewickelten Leitung folgende Abkühlung der Leitung dadurch beschleunigt wird, daß der Träger, auf den die Leitung aufgewickelt ist, von einem Kühlmittel durchströmt oder umströmt wird.

Die Abkühlung der aufgewickelten Leitung nach der Erwärmung durch die Hochfrequenzheizung erfordert im allgemeinen eine wesentlich längere Zeit als die Erwärmung. In dem Fertigungsprozeß kühlt eine Leitung dementsprechend nicht während einer einzigen Taktzeit, die für die Erwärmung ausreichen kann, genügend ab, so daß mehrere freie Stationen um das Karussell herum für den Abkühlungsprozeß vorgesehen werden. Durch die Anwendung eines Kühlmittels, das den Träger, auf den die Leitung aufgewickelt ist, durchströmt oder umströmt, wird die Zahl der benötigten Abkühlungsstationen im Prozeß verringert.

Einen besonderen Vorteil bei der Ausführung der Erfindung erlangt man dadurch, daß das Auf- und Abwickeln der Leitung auf den bzw. vom Träger im wesentlichen dadurch geschieht, daß der Träger um seine Längsachse rotiert, während ein Ende des aufzuwickelnden Leitungsstücks durch eine mit dem Träger mitrotierende Vorrichtung gehalten wird.

3

Durch dieses Verfahren werden aufwendige Einrichtungen zum Auf- und Abwickeln vermieden, und die Leitung wird ohne Drall auf den Träger auf- und von ihm wieder abgewickelt.

Im folgenden wird die Erfindung anhand eines Ausführungsbeispieles in einer Zeichnung gezeigt und nachfolgend erläutert.

In der Zeichnung zeigt

Figur 1 das Karussell 10 mit den in ihm angeordneten Trägern 17 in Längsrichtung der Träger 17 gesehen,

Figur 2 einen Träger 17 mit einer auf ihn aufgewickelten Wendelschnur 18,

Figur 3 die äußere Hochfrequenzelektrode zusammengesetzt aus den beiden halben Hohlzylindern 31, 32, und den Träger 17,

Figur 4 einen Querschnitt durch die HF-Heizung und die aufgewickelte Leitung,

Figur 5 einen der beiden halben Hohlzylinder mit der Nut 33 an einem seiner Enden,

Figur 6 eine fertige Wendelschnur.

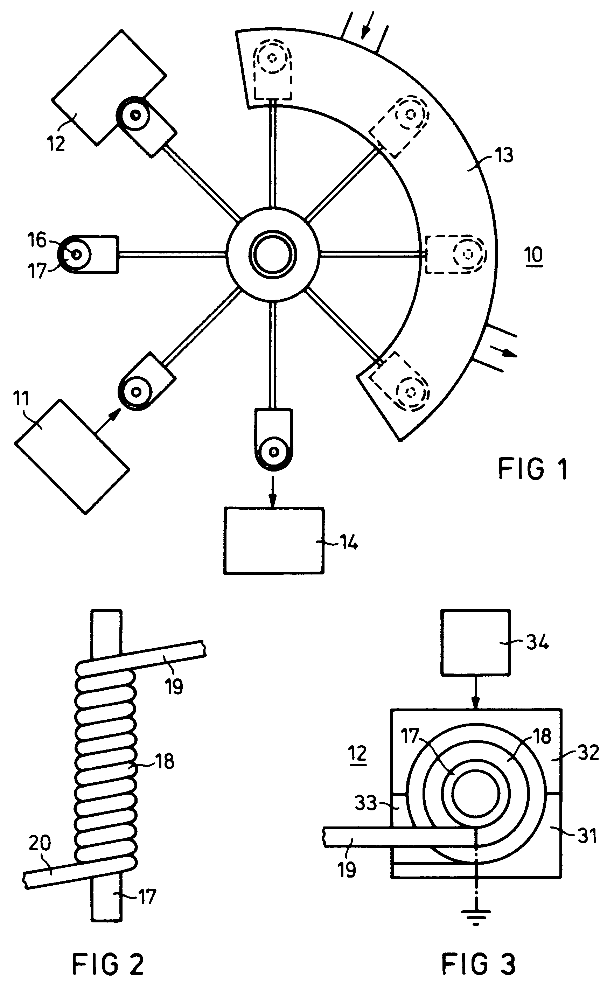

Das in Figur 1 gezeigte Karussell 10 dreht sich während des Produktionsprozesses schrittweise im Uhrzeigersinn. In dem Karussell 10 sind acht Träger angebracht, von denen einer in der Figur 1 mit 17 bezeichnet ist. Die Träger sind jeweils in einer Drehdurchführung 16 um ihre Längsachse drehbar gelagert. Um das Karussell 10 herum sind verschiedene Fertigungsstationen 11, 12, 13 und 14 angeordnet. In der Fertigungsstation 11 wird auf jeden der acht Träger ein Leitungsstück durch Drehen des Trägers 17 um seine Längsachse wendelförmig aufgewickelt. Die Station 12 besteht aus einer Hochfrequenzheizung, in der jede aufgewickelte Leitung 18 zum Zwecke des Temperns, der Vulkanisation oder der Vernetzung vorübergehend erwärmt wird. Jeder der Träger 17 bleibt für eine Taktzeit von 10 - 12 Sekunden in jeder der Fertigungsstationen, die um das Karussell 10 herum angeordnet sind. Nach der Erwärmung in der Hochfrequenzheizung 12 wird jede aufgewickelte Leitung 18 in den folgenden Stationen 13 abgekühlt. Die Abkühlung kann dadurch beschleunigt werden, daß der Träger 17 mit der auf ihn aufgewickelten Leitung 18 von einem Kühlmittel durchströmt oder umströmt wird. In der Fertigungssation 14 wird jede fertige Wendelschnur von ihrem Träger unter Rotation des Trägers um seine Längsachse abgewickelt.

Figur 2 zeigt einen Träger 17 mit einer auf ihn aufgewickelten Leitung 18, wobei die beiden Endstücke 19, 20 der Leitung 18 glatt sind.

Figur 3 zeigt die beiden Elektroden 17 und 31, 32 der Hochfrequenzheizung. Dabei bilden die beiden halben Hohlzylinder 31 und 32 einen Hohlzylinder, der den als Gegenelektrode dienenden Träger 17 einschließt. Zwischen den beiden Elektroden, dem Hohlzylinder 31, 32 und dem Träger 17 wird das Hochfrequenzfeld erzeugt, das durch die dielektrische Verlustleistung den Mantel 21 der aufgewickelten Leitung 18 erwärmt. Dabei werden die Endstücke 19 und 20 der Leitung durch die Nuten 33 von denen jeweils eine auf jeder Seite des Hohlzylinders 31, 32 vorhanden ist, aus dem beheizten Bereich herausgeführt. Diese Leitungsenden 19 und 20 bleiben nach dem Temper-, Vulkanisations- oder Vernetzungsprozeß in glatter Form zur Konfektionierung erhalten. Der Hochfrequenzsender 34 wird mit einer Nennleistung von mehreren kw betrieben. Zusätzlich wird der Träger 17, der als Rohr ausgeführt ist, vor der eigentlichen Heizphase so weit vorgewärmt, daß er der aufgewickelten Leitung 18 während des Betriebes der HF-Heizung möglichst wenig Wärme entzieht. Dazu wird jeder Träger 17 während einer definierten Zeitspanne innerhalb des Fertigungsprozesses aus einem Warmwasserreservoir mit heißem Wasser oder Wasserdampf beaufschlagt. Das Wasserreservoir ist zu diesem Zweck mit einer Heizung versehen.

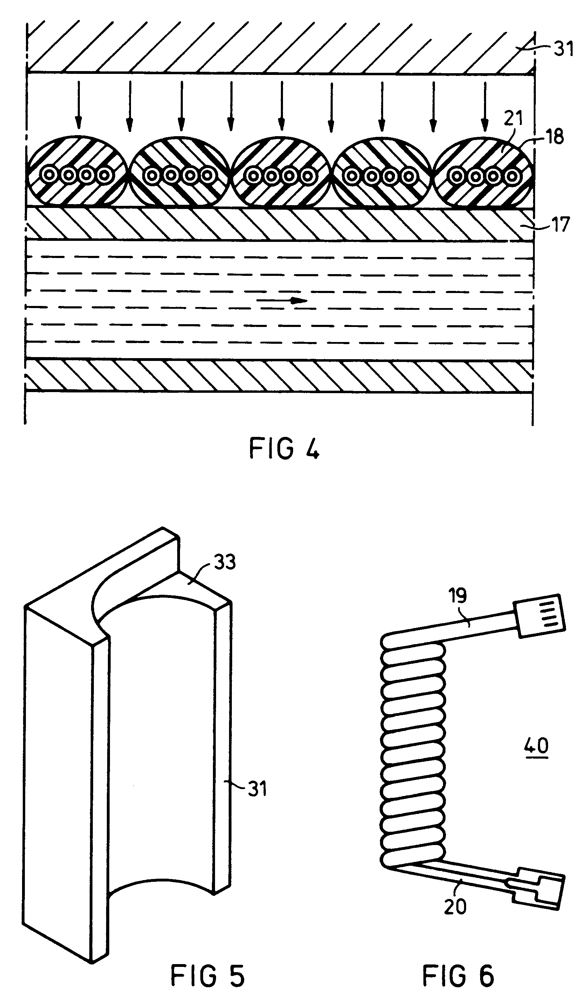

Figur 4 zeigt einen Querschnitt durch die HF-Elektrode mit einem Träger 17 und einer aufgewickelten Leitung 18. Das Aufheizen des Trägers 17 verbessert die räumliche Temperaturverteilung im Leitungsmantel 21 während des Betriebes der HF-Heizung wesentlich. Dadurch werden die kurzen Taktzeiten von etwa 10 Sekunden für die Erwärmung einer aufgewickelten Leitung 18 möglich, die eine Verkürzung der bisher für die Erwärmung benötigten Zeiten um mehrere Größenordnungen bedeuten.

Figur 5 zeigt einen halben Hohlzylinder 31 der mit einer Nut 33 an einem seiner Enden versehen ist, durch die ein Ende der herzustellenden Wendelschnur während des Heizvorgangs aus dem Hohlzylinder herausgeführt werden kann.

Figur 6 zeigt das Produkt des Herstellungsprozesses, eine konfektionierte Wendelschnur 40 mit den beiden glatten Endstücken 19, 20.

**Patentansprüche**

1. Vorrichtung zum automatischen Fertigen einer gewendelten, in Längsrichtung federnden elektrischen und/oder optischen Leitung (18) durch Aufwickeln einer glatten Leitung auf einen Träger (17) und anschließendes Tempern, Vulkanisieren oder Vernetzen des Leitungsmantels (21), bei der mehrere stabförmige Träger (17) in einem drehbaren Karussell (10) so befestigt sind, daß jeder Träger (17) an mindestens einem seiner beiden Enden um seine Längsachse drehbar gelagert ist und daß alle Träger (17) durch schrittweises Drehen des Karussells (10) durch verschiedene Fertigungsstationen (11-14) geführt werden können, die um das Karussell (10) herum angeordnet sind, **dadurch gekennzeichnet,** daß mindestens eine Fertigungsstation (12), die jeder Träger mit der auf ihn aufgewickelten Leitung (18) im Zuge der Drehung des Karussells (10) durchläuft, als Hochfrequenzheizung ausgeführt ist.

2. Vorrichtung nach Anspruch 1, **dadurch gekennzeichnet,** daß jeder Träger (17) als Rohr oder Rohrsystem ausgeführt und mindestens an einem seiner beiden Enden in einer kühl- und heizmitteldichten Drehdurchführung (16) gelagert ist.

3. Vorrichtung nach Anspruch 1, **dadurch gekennzeichnet,** daß jeder Träger (17) aus einem Heizwiderstand besteht oder mindestens einen Heizwiderstand enthält.

4. Vorrichtung nach Anspruch 1 oder einem der folgenden, **dadurch gekennzeichnet,** daß die eine Elektrode der HF-Heizung durch den Träger (17) der aufgewickelten Leitung (18) gebildet ist, während die andere Elektrode aus zwei halben Hohlzylindern (31, 32) besteht, die, zu einem Hohlzylinder zusammengesetzt, den Träger (17) mit der aufgewickelten Leitung (18) einschließen.

5. Vorrichtung nach Anspruch 4, **dadurch gekennzeichnet,** daß mindestens einer der beiden halben Hohlzylinder (31, 32) an mindestens einem Ende eine Nut (33) aufweist.

6. Vorrichtung nach Anspruch 1, 2 oder 3, **dadurch gekennzeichnet,** daß die eine Elektrode der HF-Heizung durch den Träger (17) der aufgewickelten Leitung (18) gebildet ist, während die andere Elektrode aus mehr als zwei Teilen besteht, die sich zu einem Hohlzylinder zusammenfügen lassen, der den Träger (17) mit der aufgewickelten Leitung (18) umschließt, wobei mindestens eines der Teile an mindestens einem seiner Enden eine Nut aufweist.

7. Verfahren zum Herstellen einer gewendelten Leitung (18) mit Hilfe einer Vorrichtung nach dem Anspruch 1 oder einem der folgenden **dadurch gekennzeichnet,** daß die automatisch abgelängte und in einer Fertigungsstation (11) auf einen Träger (17) aufgewickelte Leitung (18) durch schrittweises Drehen des Karussells (10) durch verschiedene Fertigungsstationen (12, 13) geführt und in einer Fertigungsstation (14) automatisch von dem Träger wieder abgewickelt wird.

8. Verfahren nach Anspruch 7, **dadurch gekennzeichnet,** daß in der Fertigungsstation (12), die als Hochfrequenzheizung ausgeführt ist, die aufgewickelte Leitung (18) durch Betreiben der HF-Heizung zum Zwecke des Temperns, Vulkanisierens oder Vernetzens vorübergehend erwärmt wird.

9. Verfahren nach Anspruch 8, **dadurch gekennzeichnet,** daß die Erwärmung des Leitungsmantels (21) mit Hilfe der HF-Heizung durch eine Beheizung des Trägers (17) unterstützt wird.

10. Verfahren nach Anspruch 9, **dadurch gekennzeichnet,** daß die Beheizung des Trägers (17) mit Hilfe eines ihn durchströmenden Heizmittels geschieht.

11. Verfahren nach Anspruch 7 oder einem der folgenden, **dadurch gekennzeichnet,** daß die auf die Erwärmung der aufgewickelten Leitung (18) folgende Abkühlung der Leitung (18) dadurch beschleunigt wird, daß der Träger (17), auf den die Leitung (18) aufgewickelt ist, von einem Kühlmittel durchströmt oder umströmt wird.

12. Verfahren nach Anspruch 7 oder einem der folgenden, **dadurch gekennzeichnet,** daß das Auf- und Abwickeln der Leitung (18) auf den bzw. vom Träger (17) im wesentlichen dadurch geschieht, daß der Träger (17) um seine Längsachse rotiert, während ein Ende des aufzuwickelnden Leitungsstücks (18) durch eine mit dem Träger (17) mitrotierende Vorrichtung gehalten wird.

**Claims**

1. Device for the automatic manufacture of a coiled electrical and/or optical cable (18), which is sprung in the longitudinal direction, by winding a smooth cable onto a former (17) and subsequent tempering, vulcanisation or crosslinking of the cable jacket (21), in which device a plurality of rod-shaped formers (17) are mounted in a rotatable carousel (10) such that each former (17) is supported on at least one of its two ends such that it can rotate about its longitudinal axis and such that all the formers (17) can be guided, by step-by-step rotation of the carousel (10), through various manufacturing stations (11-14) which are arranged around the carousel (10), characterised in that at least one manufacturing station (12), which each former passes through with the cable (18) wound on it in the course of rotation of the carousel (10), is designed as a high-frequency heater.

2. Device according to Claim 1, characterised in that each former (17) is designed as a tube or tube system and is supported on at least one of its two ends in a rotating duct (16) which is sealed against heating and cooling agents.

3. Device according to Claim 1, characterised in that each former (17) consists of a heating resistor or contains at least one heating resistor.

4. Device according to Claim 1 or one of the following claims, characterised in that the one electrode of the high-frequency heater is formed by the former (17) of the wound cable (18), while the other electrode consists of two half hollow cylinders (31, 32) which, assembled to form a hollow cylinder, enclose the former (17) with the wound cable (18).

5. Device according to Claim 4, characterised in that at least one of the two half hollow cylinders (31, 32) has a slot (33) on at least one end.

6. Device according to Claim 1, 2 or 3, characterised in that the one electrode of the high-frequency heater is formed by the former (17) of the wound cable (18), while the other electrode consists of more than two parts which can be assembled to form a hollow cylinder which encloses the former (17) with the wound cable (18), at least one of the parts having a slot on at least one of its ends.

7. Method for producing a wound cable (18) with the aid of a device according to Claim 1 or one of the following claims, characterised in that the cable (18), which is automatically cut to length and is wound onto a former (17) in a manufacturing station (11), is guided by step-by-step rotation of the carousel (10) through various manufacturing stations ( 12, 13 ) and is automatically wound off the carrier again in a manufacturing station (14).

8. Method according to Claim 7, characterised in that, in the manufacturing station (12), which is designed as a high-frequency heater, the wound cable (18) is temporarily heated for the purpose of tempering, vulcanising or crosslinking, by operation of the high-frequency heater.

9. Method according to Claim 8, characterised in that the heating of the cable jacket (21) with the aid of the high-frequency heater is supported by heating of the former (17).

10. Method according to Claim 9, characterised in that the heating of the former (17) takes place with the aid of a heating agent flowing through it.

11. Method according to Claim 7 or one of the following claims, characterised in that the cooling of the cable (18) following the heating of the wound cable (18) is accelerated in that the former (17), on which the cable (18) is wound, has a cooling agent flowing through or around it.

12. Method according to Claim 7 or one of the following claims, characterised in that the winding and unwinding of the cable (18) respectively onto and off the former (17) takes place essentially in that the former (17) rotates about its longitudinal axis, while one end of the cable piece (18) to be wound on is held by a device which rotates with the former (17).

## Revendications

1. Dispositif de fabrication automatique d'un conducteur électrique et/ou optique hélicoïdal (18), qui est élastique dans la direction longitudinale, par enroulement d'un conducteur lisse sur un support (17) et par recuit, vulcanisation ou réticulation ultérieure de la gaine (21) du conducteur, et dans lequel plusieurs supports en forme de barreaux (17) sont fixés sur un carrousel rotatif (10), de sorte que chaque support (17) est supporté, au moins au niveau de l'une de ses deux extrémités, de manière à pouvoir tourner autour d'un axe longitudinal et que tous les supports (17) peuvent être amenés, au moyen d'une rotation pas-à-pas du carrousel (10), à passer dans différents postes de fabrication (11-14), qui sont disposés autour du carrousel (10), caractérisé par le fait qu'au moins un poste de fabrication (12), que traverse chaque support portant le conducteur (18) enroulé sur lui, au cours de la rotation du carrousel (10), est agencé sous la forme d'un chauffage à haute fréquence.

2. Dispositif suivant la revendication 1, caractérisé par le fait que chaque support (17) est réalisé sous la forme d'un tube ou d'un système de tubes et est supporté, au moins à proximité d'une de ses deux extrémités, dans une traversée tournante (16) étanche vis-à-vis des agents de refroidissement et de chauffage.

3. Dispositif suivant la revendication 1, caractérisé par le fait que chaque support (17) est constitué par une résistance de chauffage ou contient au moins une résistance de chauffage.

4. Dispositif suivant la revendication 1 ou l'une des suivantes, caractérisé par le fait qu'une électrode du dispositif de chauffage à haute fréquence est formée par le support (17) du conducteur bobiné (18), tandis que l'autre électrode est constituée par deux demi-cylindres creux (31,32), qui, assemblés pour former un cylindre creux, enserrent le support (17) comportant le conducteur (18) enroulé.

5. Dispositif suivant la revendication 4, caractérisé par le fait qu'au moins l'un des deux demi-cylindres creux (31,32) possède une rainure (33) au moins à une extrémité.

6. Dispositif suivant la revendication 1, 2 ou 3, caractérisé par le fait qu'une électrode du dispositif de chauffage à haute fréquence est formée par le support (17) du conducteur bobiné (18), tandis que l'autre électrode est constituée par plus de deux parties, qui peuvent être réunies pour former un cylindre creux qui entoure le support (17) et le conducteur enroulé (18), auquel cas au moins l'une des parties possède une rainure, au moins à l'une de ses extrémités.

7. Procédé pour fabriquer un conducteur hélicoïdal (10) à l'aide d'un dispositif suivant la revendication 1 ou l'une des suivantes, caractérisé par le fait qu'on fait passer le conducteur (18) coupé automatiquement à longueur et enroulé, dans un poste de fabrication (11), sur un support (10), au moyen d'une rotation pas-à-pas du carrousel (10), par différents postes de fabrication (12,13) et qu'il est automatiquement à nouveau déroulé du support, dans un poste de fabrication (14).

8. Procédé suivant la revendication 7, caractérisé par le fait que dans le poste de fabrication (12) qui est réalisé sous la forme d'un dispositif de chauffage à haute fréquence, le conducteur enroulé (18) est chauffé passagèrement par la mise en marche d'un chauffage à haute fréquence pour réaliser le recuit, la vulcanisation ou la réticulation.

9. Procédé suivant la revendication 8, caractérisé par le fait que l'échauffement de la gaine (21) du conducteur à l'aide du dispositif de chauffage à haute fréquence est assisté par un chauffage du support (17).

10. Procédé suivant la revendication 9, caractérisé par le fait que le chauffage du support (17) est réalisé à l'aide d'un fluide de chauffage qui le traverse.

11. Procédé suivant la revendication 7 ou l'une des suivantes, caractérisé par le fait que le refroidissement du conducteur enroulé (18), qui intervient à la suite du chauffage de ce conducteur, est accéléré par le fait que le support (17), sur lequel est enroulé le conducteur (18), est parcouru par un fluide de refroidissement ou est entouré par la circulation d'un tel fluide.

12. Procédé suivant la revendication 7 ou l'une des suivantes, caractérisé par le fait que l'enroulement et le déroulement du conducteur (18) sur le ou à partir du support (17) est réalisé essentiellement par le fait que le support (17) tourne autour de son axe longitudinal, tandis qu'une extrémité de l'élément de conducteur devant être enroulé (18) est maintenue par un dispositif qui tourne conjointement avec le support (17).

FIG 1

12

13

10

16
17

11

14

FIG 2

19

18

20

17

FIG 3

34

12
17
18
32
33
19
31

8

FIG 4

FIG 5

FIG 6